Europäisches Patentamt

European Patent Office

Office européen des brevets

(19)

(11) Publication number: **0 419 396 A1**

# (12) EUROPEAN PATENT APPLICATION

(21) Application number: **90610055.7**

(22) Date of filing: **04.09.90**

(51) Int. Cl.5 **B01D 67/00**, //B01D69/12

(30) Priority: **05.09.89 DK 4386/89**

(43) Date of publication of application:
**27.03.91 Bulletin 91/13**

(84) Designated Contracting States:
**AT DE DK ES FR GB IT NL SE**

(71) Applicant: **DOW DANMARK A/S**
**Toldbodgade 33**
**DK-1253 Copenhagen K(DK)**

(72) Inventor: **Stengaard, Flemming Faurby**
**Traelholmvej 5**
**DK-4900 Nakskov(DK)**
Inventor: **Hvid-Ipsen, Karen**
**Snebaervaenget 14**
**DK-5210 Odense NV(DK)**
Inventor: **Nielsen, Peter Sylvest**
**Mosestedet 45**
**DK-3500 Vaerlose(DK)**

(74) Representative: **Zeuthen-Aagaard, Henrik et al**
**Chas. Hude, 33 H.C. Andersens Boulevard**
**DK-1553 Copenhagen V(DK)**

(54) **Hydrophilic membrane for use in ultrafiltration and method of preparation.**

(57) A permeable, porous synthetic membrane with hydrophilic character for use in ultrafiltration or microfiltration. The hydrophilic character of the membrane is obtained by applying an ageous solution comprising one or more polymers of a molecular weight of between 50,000 and 200,000 and comprising at least two functional hydroxy and/or amino groups, and one or more monomers comprising at least two functional hydroxy and/or amino groups, said aqueous solution having a pH-value of at least 10, followed by removal of excess solution and fixation by applying an isocyanate crosslinking agent dissolved in an organic solvent immiscible with water.

EP 0 419 396 A1

## HYDROPHILIC MEMBRANE FOR USE IN ULTRAFILTRATION AND METHOD OF PREPARATION

The present invention relates to a permeable, porous synthetic membrane with hydrophilic character for use in ultrafiltration or microfiltration as well as a method of preparing the same.

Ultrafiltration membranes (UF membranes) and microfiltration membranes (MF membranes) are widely used in many branches of industry to separate and concentrate solutions and suspensions. Fields of application of such membranes include water processing, food processing, chemical processing, pharmaceutical processing, separation in bio-technology, waste water processing etc. as well as various separation and concentration tasks, particle removal and the like.

In the present specification the word membrane is used to describe thin, porous films, foils and sheets, usually in form of permeable flat films, tubes or hollow fibers prepared from various organic types of polymers. UF membranes are characterised by their ability to separate macromolecules from low molecular weight compounds and salts. Membranes are specified by the molecular weight cutoff value, (MWCO). The cutoff value normally refers to well-defined macromolecules (globular proteins) and indicates that macromolecules with a molecular weight higher than the given MWCO are not allowed to pass the membrane, while molecules with a lower molecular weight pass the membrane to a greater or lesser degree. MF membranes are characterised by their ability to prevent the passage of bacteria and other microorganisms, particles, colloids etc. and are specified by the indication of their pore size determined, for instance, by the so-called Bubble Point Method as stated in ASTM F316.

In order to be usable the membranes have to meet several requirements, such as:

sufficient physical strength for resisting the mechanical forces the membranes are subject to during operation in the filtration system in question;

good chemical resistance, allowing the use of the membranes in a wide temperature and pH range in different chemical environments as well as toleration of various detergents and disinfectants;

good transport properties (flux) and selectivity allowing a given separation/concentration task to be technically and economically feasible.

UF and MF membranes are usually made of highly resistant, synthetic polymers more or less hydrophobic by nature and displaying a great tendency for ad- and absorption of many organic compounds and colloids.

The expression "hydrophobic membrane" refers to any membrane made more hydrophilic by the method according to the invention. Any change in the hydrophobic/hydrophilic properties of the membrane can be determined by measuring the change in contact angle between the membrane and a suitable liquid with known surface tension, such as water.

Ad- and absorption results in fouling of the membrane causing a decrease of flux values during filtration. At the same time the separation properties are altered, since the material ad- or absorbed on the surface of the membrane forms a layer able to act as a secondary membrane.

A number of the above disadvantages are avoided if hydrophilic instead of hydrophobic membranes are used, said hydrophilic membranes being easily wetted by water and possessing low ad- and absorption of fouling materials (e. g. proteins) . They generally possess an advantageously low protein binding tendency and a decreased tendency for fouling, the latter in turn resulting in advantages in form of increased flux values, decreased flux reduction with time as well as improved cleaning and reduced cleaning frequency. A further advantage of hydrophilic membranes compared to traditional hydrophobic ones is their improved storage ability in dry condition, since they are easily rewetted with water.

It is known to obtain a permeable, porous, synthetic membrane with increased hydrophilicity by applying or impregnating the membrane with a polymeric or polymerisable material of hydrophilic character, fixating said material to the membrane by polymerising and/or crosslinking the material under conditions maintaining the hydrophilic character. This technique is for instance disclosed in GB patent specification no. 1,538,810. Fluoropolymers are hydrophilised by treatment with a one-phase system comprising small, water-soluble polymers, such as polyvinyl alcohol and cellulose derivatives, and optionally crosslinking agents. The material used fills the pores of the fluoropolymer structure and the material is rendered insoluble by means of cross-linking reactions, such as heat treatment, acetalisation, esterification, chemical reaction with bichromates or ionising radiation. The resulting bonds, such as ester bonds or acetal bonds, possess, however, a low chemical resistance. The polyvinyl alcohol used according to the above patent has a molecular weight of between 300 and 2,500. The method according to the above patent does not alter the permeability of the membrane. It is thus impossible to use the known technique to prepare membranes having different cutoff values adapted to a specific task.

DK patent application no. 4079/86 and the corresponding EP patent application no. 257,635A2 disc lose a permeable, porous, synthetic membrane with hydrophilic character, where the hydrophilic character of the membrane is obtained by treatment with a solution comprising one or more hydrophilic, mono- or polymeric compounds selected among the group containing soluble, hydroxy-containing cellulose derivatives, and low molecular weight, polyfunctional, amino- and/or hydroxy-containing compounds, followed by rendering the layer deposited on the membrane surface insoluble by means of a catalysed reaction at elevated temperatures in order to fixate the hydrophilic material to the membrane. The reaction may take place in the presence of a crosslinking agent, a surfactant and/or an initiator.

Compared to more hydrophobic membranes the above-mentioned, hydrophilic membranes have considerably improved filtering properties in the above-mentioned fields of application. The preparation of such membranes is, however, often difficult, because of their unsatisfactory strength, as a great number has to be discarded. One reason for such a decrease in strength may be the influence of the support membrane during preparation due to, for instance, the attack by chemicals, heat and/or radiation.

There is thus a need for hydrophilic membranes for ultrafiltration and microfiltration having an improved and satisfactory strength while retaining their useful properties, such as the ones obtained by membranes disclosed in EP patent application No. 257,635A2.

It is known to prepare membranes for reverse osmosis (RO) by hydrophilisation of hydrophobic membranes by means of a hydrophilic polymer obtained by polymerisation and/or crosslinking using a two-phase reaction system. Interfacial surface polycondensation between the active components of the two phases occurs at the interface between the two immiscible phases. As a result the polymer chains are crosslinked, thus becoming water-insoluble and thereby fixated on the surface of the membrane in form of a hydrophilic layer. This technique is, for instance, described in GB patent specification No. 1,558,807, US patent specification No. 3,951,815 and US patent specification No. 4,039,440. In these cases water-soluble polymers, such as amine-modified polyepihalohydrins and polyethylene imine are fixated to the membrane by a solution of crosslinking agents, such as polyisocyanate in a solvent immiscible with water.

Lindner et al, GB patent specification No 2,189,168A discloses composite membranes which are capable of passing inorganic salts but retaining low molecular weight, about 150-300, organic compounds. The membrane is prepared by interfacial polymerization in aqueous solution of a hydrophilic polymer, a first crosslinking agent, and optionally monomeric components with an organic solution of a second crosslinking agent. Thereafter, optionally the polymer is reacted with a third crosslinking agent. The membrane requires that the polymer, monomers, or one of the two or three crosslinking agents contain ionic groups or groups transferable into ionic groups. This membrane is very specific as to the separation it can perform and if used to separate materials of larger molecular weights is subject to rapid plugging and exhibits a low water or liquid flux.

Wrasidlo et al, World Patent Application (PCT 88/02653) discloses ultrafiltration thin film membranes prepared by controlled crosslinking of polymer films of substantially monomolecular thickness by techniques which afford control over the crosslink density in the thin film, achieved by regulating the cross link determinates of the polymer system. Membranes with a pore size of 500 to 1,000,000 and a thin film composite layer of 1.2 to 150 nanometers are disclosed. The membranes are prepared by forming films on the support of polymer solutions, or solutions of oligomers or prepolymers, and reacting with a cross linking reactant in a diverse, generally immiscible phase. The initial polymer layer is formed into a monomolecular layer by the thinness of the solution or orientation of the polymer on the surface of the solution. Several techniques are used to disrupt the crosslinking and its density to prepare a membrane of the desired pore size, i. e. reactant concentration control, time and temperature control, solution property control, and crosslink description. It is central to the disclosed invention that the techniques of interfacial condensation are not, as is usual, permitted to proceed to a fully crosslinked state in order to provide a thin film membrane, or in the alternative, that the effect of full crosslinking is partly reversed. The membranes disclosed are prepared by complex processes, which require careful process control. Such processes are difficult to control, and can be very costly.

Membranes used for reverse osmosis (RO) are characterised by being dense and compact membranes able to reject salts. This is an important difference compared to UF and MF membranes, the latter allowing the passage of salts. Typically RO membranes do not allow the passage of compounds having a molecular weight of more than approx. 500, while the rejection limit of UF membranes is typically in the molecular weight range of 1,000 to 300,000. MF membranes do not actually have a cutoff value, since compounds having a molecular weight of several millions are allowed to pass. Rejection first occurs at a cellular/colloidal level. MF membranes are defined by their pore size, which is typically in the range of 0.02 micrometer to 50 micrometers while the pore size of a UF membrane is in the range of 20 to 200 Ångstrøm. RO membranes are so dense and compact that their pore structure cannot be defined and separation occurs at a molecular diffusion level. A further difference between RO membranes and UF/MF membranes is the pressure gradient across the membranes used during their application. A typical pressure for RO membranes during operation is between 40 and 100 bar, whereas the pressure for UF/MF membranes does not exceed 2 to 15 bar.

There are thus considerable structural differences between RO membranes on the one hand and membranes for ultrafiltration and microfiltration on the other. It has, however, been found that the two-phase technique known from the preparation of RO membranes for obtaining a hydrophilic membrane character can advantageously be employed for the preparation of synthetic membranes with hydrophilic character for ultrafiltration and microfiltration.

The object of the present invention is to provide hydrophilic membranes for ultrafiltration and microfiltration maintaining the excellent properties of known hydrophilic ultrafiltration and microfiltration membranes while simultaneously improving their strength, especially during preparation, as well as a method for the preparation of such a membrane. A further object of the invention is to allow a controllable selectivity of the finished membrane, thus enabling the preparation of membranes having a wide range of molecular weight cutoff values.

The object of the invention is accomplished by a membrane of the above type, characterized in that the hydrophilic character of the membrane is obtained by applying an aqeous solution comprising:

a) one or more polymers of a molecular weight of between 50,000 and 200,000 and comprising at least two functional hydroxy and/or amino groups, preferably at least one group per monomer unit of the polymer, and

b) one or more monomers comprising at least two functional hydroxy and/or amino groups, preferably three functional groups,

c) said aqueous solution having a pH-value of at least 10, preferably at least 12, followed by removal of excess solution and fixation by applying an isocyanate crosslinking agent dissolved in an organic solvent immiscible with water.

Such a membrane can be prepared by the method according to the invention, characterized by applying to the membrane an aqeous solution, said solution comprising:

a) one or more polymers of a molecular weight of between 50,000 and 200,000 and comprising at least two functional hydroxy and/or amino groups, preferably at least one group per monomer unit of the polymer, and

b) one or more moncmers comprising at least two functional hydroxy and/or amino groups, preferably three functional groups,

c) said aqueous solution having a pH-value of at least 10, preferably at least 12, followed by removal of excess solution and fixation by applying an isocyanate cross linking agent dissolved in an organic solvent immiscible with water and optionally with subsequent curing.

The application of the aqueous solution and/or isocyanate cross linking agent dissolved in the organic solvent is advantageously carried out by means of spraying on the one side of the support membrane, for instance by an arrangement of nozzles thus obtaining a thin polymeric film on one surface of the support membrane.

In another embodiment the aqueous solution and/or isocyanate crosslinking agent dissolved in the organic solvent can be applied by means of immersion of the membrane.

The aqueous solution comprises preferably 0.2-2 w/v% polymer and 0.2-5 w/v% monomer, more preferably 0.3-0.8 w/v% polymer, and 0.2-5 w/v% monomer, preferably 1-2 w/v% monomer. Such amounts and such ratios between polymer and monomer result in particularly advantageous strength of the membrane, a suitable ratio between strength and hydrophilic character as well as a controllable selectivity.

An important feature of the method according to the invention is the extensive possibilities to control the cutoff value, for instance by varying the concentrations. This can be combined with the proper choice of support membrane with suitable cutoff value. In general, choosing a support membrane with a high cutoff value results in a high cutoff value of the finished membrane, the latter, however, being lower than the one of the support membrane.

In the present specification with claims w/v% means weight/volume%, where weight and volume are measured in g and ml.

Examples of polymers advantageously used in the aqueous solution for the preparation of a membrane include any polymer of a molecular weight of between 50,000 and 200,000, such as approx. 125,000, and comprising at least two functional hydroxy and/or amino groups, preferably at least one group per monomer unit of the polymer. Examples of suitable polymers include polyvinyl alcohol, polyethylene imine, chitosan, and other hydroxy-containing polysaccharide compounds, such as hydroxyalkyl cellulose, for instance hydroxypropyl cellulose or hydroxyethyl cellulose, and alkylhydroxyalkyl cellulose, such as methylhydroxyethyl cellulose, pectine, alginic acid, locust bean gum, xanthan gum and other vegetable, animal or microbial polysaccharides and mixtures of such polymers.

Examples of monomers advantageously used in the aqueous solution for the preparation of a membrane include any monomer comprising at least two functional hydroxy and/or amino groups, preferably three functional groups, Examples of suitable monomers include sorbitol, pentaerythritol, glucose, 2,4-diamino-6-hydroxypyrimidine, piperazine, 4,6-diamino-2-mercaptopyrimidine, 4,5-diamino-6-hydroxy-2-mercaptopyrimidine, triethylenetetraamine and 2,6-diaminopyridine and mixtures thereof.

In a particularly advantageous example of a membrane according to the invention the polymer is polyvinyl alcohol, and the monomer is 2,4-diamino-6-hydroxypyrimidine.

The isocyanate cross linking agent is a compound comprising two or more functional isocyanate groups.

A non-limiting example of such isocyanate crosslinking agents is the following compound of the formula:

$$O = C = N - R - N = C = O$$

wherein R is a divalent, inactive group, such as a divalent hydrocarbon group. Examples of such hydrocarbon groups include alkylene, cycloalkylene, phenylene and diphenylalkane, which groups can be substituted with one or more $C_{1-6}$-alkyl groups.

Especially suitable crosslinking agents include hexamethylene-1,6-diisocyanate, toluene-1,4-diisocyanate, isophorone-diisocyanate, 1,4-phenylenediisocyanate and diphenylmethane-4,4'-diisocyanate. The most preferred cross linking agent is hexamethylene-1,6-diisocyanate.

Subsequent to application of the aqueous solution comprising polymer and monomer and removal of excess solution the isocyanate crosslinking agent dissolved in an organic solvent immiscible with water is applied to the membrane according to the invention. The concentration of the isocyanate crosslinking agent in the solution is, for instance, 0.1 to 5 w v%, preferably around 0.2 w v%. The organic solvent immiscible with water may be any organic solvent inactive during the crosslinking process and not dissolving the support membrane. It should furthermore have a low boiling point so that it is easily evaporated off the finished membrane. Examples of such solvents include hydrocarbons, such as hexane or heptane, halogenated hydrocarbons, such as chlorofluoro-substituted hydrocarbons, for instance Freon[R] 113, i.e. 1,1,2-trichlorotrifluoroethane.

A particular advantage of the membrane and the method according to present invention is the use of a two-phase system, whereas the method, for instance disclosed in GB patent specification No. 1,538,810, is carried out in a single-phase system. This is due to the fact that particularly reactive compounds can be chosen, said compounds forming a non-dissolvable deposit under conditions not harmful to the membrane. A further advantage is the increased resistance of the resulting chemical bonds compared to the ester bonds or acetal bonds obtained according to GB patent specification No. 1,538,810. Yet another advantage is the hydrophilicity of the formed urethane and urea bonds. The method according to the present invention furthermore differs from the method disclosed in GB patent specification No. 1,538,810 by the polymer, for instance polyvinyl alcohol, being of a high molecular weight of at least 50,000. Moreover, isocyanate is the sole cross linking agent used and the reactants are applied, as mentioned above, in a two-phase system. Apart from hydrophilicity the method according to the present invention also results in improved functional properties, which are described in the following examples. The method according to the present invention further allows a suitable choice of polymer, monomer and crosslinking agent as well as of suitable amounts of these components to prepare a membrane with a tailor-made cutoff value.

The crosslinking reaction during the preparation of the membrane according to the present invention can be carried out without a catalyst. A person skilled in the art is, however, well aware of the fact that such processes may be accelerated by using a conventional catalyst, such as an organic tin compound. Depending on its solubility the catalyst may be added to either the aqueous or the organic phase. It is usually added to the organic phase.

According to the inventive method the starting membrane is a conventional, asymmetric support membrane prepared by conventional phase inversion technique using hydrophobic synthetic materials, such as polysulphone, polyethersulphone, polyvinylidene fluoride, polyacrylonitrile, cellulose acetate, nylon, polybenzimidazole, polyimide, polyethylene or polypropylene. There are also other known methods for the preparation of support membranes, such as the method know as stretching among those skilled in the art, where a polymer melt is extruded to a film and stretched, as the film is wound up with a velocity greater than the extrusion velocity. After curing the film can be further streched in the same direction as the extrusion direction, thus elongating the pores. In another method known as track-etching among those skilled in the art a conventional, impermeable synthetic film is exposed to ionising radiation, whereupon the film is treated with a caustic solution so that well-defined pores are formed in the tracks of the ionised particles. The two above methods result in membranes based on hydrophobic polymers, such as teflon, polycarbonate and polyethylene terephthalate.

Phase inversion synthetic membranes are usually prepared from a solution of the corresponding synthetic material in suitable solvents. The solution is formed in a thin film, a tube or a hollow fiber, whereupon the polymeric material is precipitated under controlled conditions. The precipitation may, for instance, be performed by means of evaporation of the solvent or by means of contacting the synthetic solution with a non-solvent. US patent specification no. 3.615.024 discloses a method for the preparation of porous, permeable, synthetic membranes. "Reverse Osmosis/Ultrafiltration Process Principles" by S. Sourirajan and Takeshi Matsuura, National Research Council, Canada, 1985, NRCC No. 24188, p. 788-792 describes a technique for preparing flat membranes. Douglas R. Lloyd and Timothy B. Meluch, "Material Science of Synthetic Membranes", ed: D.R. Lloyd, ACS-symposium Series 269, American Chemical Society, Washington D.C., 1985, p. 1-21 mention examples of a number of different synthetic materials usable for the preparation of membranes.

The membranes are often directly prepared on a support sheet thus constituting an integral part of the final membrane and providing good mechanical strength. Advantageously, a starting membrane reinforced with a support sheet of non-woven polypropylene is thus used for the preparation of a membrane according to the invention.

It has been found that porous membranes prepared from aromatic polysulphones are particularly suitable support membranes for use in the method according to the present invention, where ultrathin interfacial surface polycondensation polymers are applied in form of a polyurethane/urea-copolymers. Preferred aromatic polysulphone support membranes are prepared by phase inversion casting a 15-25% by weight solution of polyethersulphone in a thin layer, typically 50-200 micrometers thin, on a non-woven polypropylene or polyester filter material. The solution comprises one or more or ganic, polar solvents for the polymer. One or more non-solvents as well as various additives may also be added, said additives including surfactants, soluble, high molecular weight polymers, salts etc. The addition of the non-solvents as well as the additives is important for the properties of the finished membrane, such as porosity, pore size and pore size distribution, in other words the permeability properties of the membrane characterized by water permeability (flux) and separation ability (cutoff value). The permselective properties of the support membrane may also be controlled by altering the temperature in the aqueous precipitation/coagulation bath. It is thus possible to prepare support membranes covering a wide range of molecular weight cutoff values ranging typically from 1,000 to 200,000 MWCO. This is of great importance, since the cutoff value of a hydrophilic membrane according to the present invention is determined by the properties of the support membrane, the method of preparation as well as by the composition of the thin hydrophilic layer applied to the support membrane during the method according to the present invention.

The usually hydrophobic support membrane is converted to a membrane of increased hydrophilicity by the method according to the present invention. The latter is carried out by treating the support membrane with an aqueous solution comprising polymer and monomer either by application or immersing the support membrane in the aqueous solution. The treatment is usually carried out at room temperature, but may in principle be carried out at any temperature in the range of 5-95°C. The contact time of the support membrane in the aqueous solution during application or immersion is usually 0.5 to 10 min, especially 1 to 3 min, such as 1.5 min. Subsequently excess liquid is removed by dripping or wringing, for instance by letting the membrane pass through a pair of rollers, whereupon the membrane is treated with the organic solution of the crosslinking agent. This treatment is also carried out by either application or immersion, and the contact time is usually between 0.5 and 10 min, especially from 1 to 3 min, preferably approx. 1.5 min. Subsequent to the treatment with two immiscible phases of aqueous solution and organic solution, respectively, an interfacial surface polycondensation reaction takes place between the active components of the two phases. The polymer chains are thus crosslinked such that the resulting polyurethane/urea-copolymer is water-insoluble and fixated on the surface of the membrane in form of a hydrophilic surface layer. The curing reaction can be carried out at any given temperature in the range of between 15 and 120° C, for instance by using a ventilated oven. The reaction time is from 0.5 to 10 min, for instance 2 min. After curing the membrane can advantageously be treated with an aqueous solution of glycerol and sodium dodecyl sulphate or another combination of surfactant and salt, thereby improving the rewetting properties of the membrane. The membrane can then be dried at elevated temperatures, for instance in a ventilated oven at 50 to 120°C for 2 to 20 min.

Advantages of treating hydrophobic support membranes by the method according to the present invention include those listed below:

1) The surface becomes more hydrophilic and the membrane is easily rewetted with water.

2) The selectivity of the membrane can be changed so that a number of chemcially uniform membranes are prepared, each having a different cutoff value. Consequently the cutoff value may be determined by suitable concentrations of polymer and monomer in the aqueous solution and of the crosslinking agent in the organic phase. Apart from that the cutoff value may also be varied by choosing a suitable support membrane. In other words, a wide range of possibilities for controlling the selectivity is obtained by the combined choice of support membrane and concentrations of the solutions to be applied, thus allowing tailor-made membranes for very different functions.

3) The membrane has a low tendency for fouling.

4) The membrane has improved transport properties (flux properties). Preferably treated membrane exhibits a flux increase of at least 20% for whey or skimmed milk over concentrated membranes more preferably an increase of at least 30% increase, most preferably an increase of at least 50% increase.

5) The membrane has a surface resisting chemical cleaning.

Further scope of applicability of the present invention will become apparent from the detailed description given hereinafter. However, it should be understood, that the detailed description and specific examples, while indicating preferred embodiments of the invention, are given by way of illustration only, since various changes and modifications within the spirit and scope of the invention will become apparent to those skilled in the art from this detailed description.

The invention is described in greater detail below by means of several examples.

Example A: Preparation of a UF support membrane

A 17.5% solution of polyethersulphone (VICTREX 5200 G available from ICI) in 72.5% dimethylacetamide and 10% methylglycol is spread by means of a doctor blade in thickness of 150 micrometers on a web of non-woven polypropylene filter material (thickness 200 micrometers) conveyed on an endless steel belt at a velocity of 6.7 m min. After approx. 1 s the cast layer is precipitated by immersion in water having a temperature of 2°C to form the finished support membrane. The water permeability of the support membrane (flux) was measured to be 480 l m$^2$ h in a plate-and-frame filtration module (DDS Filtration module 38, membrane area 0.45 m$^2$) at a pressure of 2 bar and a temperature of 20°C. The cutoff value of the support membrane was determined to be 50,000 MWCO using a dextrane-containing test solution. The finished support membrane is used in Example 2 to prepare a hydrophilic membrane according to the invention. Other support membranes for ultrafiltration used in the examples are prepared correspondingly.

Example B: Preparation of a MF support membrane

A solution is prepared comprising 18.5% polyvinylidene fluoride (Dyflor$^R$ 2000 available from Dynamit Nobel), 1,5% chlorotrifluoroethylene/vinylidene fluoride copolymer (Kel-F 800 Resin available from 3M Company) and 80% N-methylpyrrolidone. Then 1.5% polyvinylpyrrolidone (Kollidon$^R$ 90 from BASF), based on the total amount of the solution, is added. The solution is spread 0.15 mm thick on a non-woven polypropylene material conveyed on an endless steel band at a velocity of 6.5 m min. After approx. 5 sec the spread layer is precipitated by immersion into a water bath of 25°C to form a microfiltration membrane. The water permeability of the membrane is 862 l m$^2$ h, measured for pure water in a DDS RO-Division Lab 20 module (membrane area 0.696 m$^2$). After drying the bubble point was measured to be 250 mbar, using 2-propanol as wetting agent.

Examples 1-3

These examples describe the preparation of hydrophilic membranes using various types of support membranes.

A web of asymmetric UF membrane is mounted in a pilot plant for continuous treatment of long webs. An aqueous solution comprising 0.5% polyvinyl alcohol of a molecular weight of 125,000, 1.5% 2,4-diamino-6-hydroxypyrimidine and 1% NaOH (resulting in a pH of 12.55) is sprayed on the membrane by means of an arrangement comprising several nozzles. Excess liquid is drained off between a pair of rollers. Then a 0.2% solution of hexamethylene-1,6-diisocyanate in 1,1,2-trichlorotrifluoroethane (Freon$^R$ 113) is applied. After a reaction time of approx. 1 min the finished thin film membrane is washed with an aqueous solution comprising 2 w/v% glycerol and 0.2 w/v% sodium dodecyl sulphate, and the membrane is dried in a ventilated oven for approx. 9 min at 95°C.

The membrane is tested in a plate-and-frame laboratory filter module (available from DDS-Filtration, DK-4900 Nakskov; Lab module 20, membrane area 0.696 m²) to determine the flux with water, i.e. by filtering pure water, and to measure the permeability by means of a polymeric test compound having a linear molecular weight distribution. The test compound used is "Dextran 4626" available from Sigma-Aldrich Corporation, P 0 Box 14508, St. Louis, Missouri, USA.

The measurements are carried out both with untreated support membranes and treated membranes. The results appear from the following table.

| | | untreated | | treated | |
|---|---|---|---|---|---|
| Ex | support membrane* | water flux 1/m²/h/b ar | % permeability | water flux 1/m²/h/b ar | % permeability |
| 1 | PESF-20-U** | 57 | 25 | 16 | 4 |
| 2 | PESF-50-U** | 106 | 83 | 37 | 27 |
| 3 | GR-100-U*** | 214 | 100 | 59 | 80 |

\* the numbers specifying the support membranes refer to their cutoff values in thousands: thus number 20 refers to a cut-off value of 20,000
\*\* polyethersulphone membrane
\*\*\* polysulphone membrane

Percent permeability is the percent of the solute which passes through the membrane. As is apparent the permeability may be altered according to requirements by treatment according to the invention.

Example 4

This example illustrates the improvement in flux property due to the treatment according to the present invention, i.e. the capacity of the membrane can be increased. Such increased flux values of the modified membrane can be obtained when working with protinaceous liquids having a great fouling tendency, such as whey. During testing an untreated and a treated membrane are compared.

The test is carried out by filtering a whey powder solution on an ultrafiltration module (DDS module 38, available from DDS-Filtration, membrane area 0.45m²). The test is carried out so that approx. 30 l whey solution are recirculated in the module for 30 min at a temperature of 20° C and an mean pressure of 4 bar. The membrane area used during the test was 0.45 m² for all tested membrane types. After 30 min recirculation the permeate flux values were measured. The results appear from the following table:

| membrane | whey permeate flux, 1/m²/h at 4 bar |
|---|---|
| PESF-50-U untreated | 43.0 |
| PESF-50-U treated | 50.7 |

As is apparent the treated membrane has a flux value of 50.7 l/m²/h compared to 43.0 l/m²/h for the untreated membrane.

Example 5

This example illustrates the improved capacity (flux) of a membrane treated according to the invention. The test was carried out by filtering whey in the manner described in Example 4. The following membranes were used:
DDS-GR61PP: A standard membrane available from DDS-Filtration for dairy use. This membrane is a polysulphone membrane not subjected to surface treatment and prepared in a conventional manner.

DDS-ETNA2OA: This membrane has been surface-treated and possesses useful properties for protinaceous solutions. This membrane is prepared according to DK patent application No. 4079/86.
Surface-treated membrane according to Example 2.

All three membranes possess similar separation properties. The permeate flux values are determined after 30 min recirculation of approx. 30 l whey powder solution in a DDS-module 38 for ultrafiltration. The test is carried out at 45°C with an mean pressure of 4 bar using a membrane area of approx. 0.45 m² for all tested membranes. The results appear from the following table:

| membrane | whey permeate flux $1 \cdot m^2 \cdot h$ |
|---|---|
| surface-modified polysulphone acc. to Ex. 2 | 55 |
| DDS-GR61PP | 49 |
| DDS-ETNA20A | 50 |

As is apparent the membrane according to the invention has an excellent capacity when filtering protinaceous products, such as whey, displaying a tendency for fouling.

Examples 6-8

These examples illustrate the useful membrane properties obtained by using a combination of polymer and monomer in aqueous solution. Such a combination ensures a dense, compact and stable film.

An asymmetric ultrafiltration membrane prepared from polyethersulphone having a cutoff value of 50,000 is streched on a steel frame and immersed for 2 min in the aqueous solutions given in the following table. The membrane is then removed and excess solution is drained off for 1 min, whereupon the membrane is immersed in a solution of 0.2% hexamethylene-1,6-diisocyanate in 1,1,2-trichlorotrifluoroethane.

The membranes are tested on a DDS Lab module 20 for RO and UF test filtrations. The membranes are first conditioned/cleaned by rinsing with a strongly alkaline aqueous solution (pH approx. 12). Then the permeability of each membrane is tested by using a polysaccharide sample (Dextran 4626) at neutral pH. The permeability appears from the following table.

9

| Ex. | aqueous solution | % permeability |
|---|---|---|
| 6 | 1.5 w/v% 2,4-diamino-6-hydroxypyrimidine + 0.5 w/v% polyvinyl alcohol + 0.5 w/v% NaOH | 66 |
| 7 | 0.5 w/v% polyvinyl alcohol | 99 |
| 8 | 0.5 w/v% polyvinyl alcohol + 0.5 w/v% NaOh | 84 |
|   | untreated membrane | 98 |

As is apparent, the treatment with polyvinyl alcohol or the one with polyvinyl alcohol and NaOH does not result in any significant changes when compared to the untreated membrane. On the other hand, the permeability is considerably improved by treatment with a combination of monomer, polymer and base.

## Exampel 9

This example demonstrates the reduced tendency of an inventive membrane for fouling thus maintaining its high flux.

During a test filtration a membrane prepared according to Example 2 is contacted with test solutions known to have a considerable flux-reducing effect. The test is carried out in a DDS-Lab module 20 under transverse current conditions at 20°C and a mean pressure of 2 bar for 4 h, the permeate being returned to the feed tank. Water flux, i.e. the flux value for pure water, is determined before and after filtration.

The following table shows the flux values after filtering for 4 h in per cent of the original flux value.

| Water flux, % of original value | | |
|---|---|---|
| test solution | untreated membrane | treated membrane |
| 0.1 % Dextran (T500, Pharmacia) | 45 % | 72 % |
| 0.1 % Bovin Serum Albumin | 67 % | 82 % |
| 0.1 % polyethylene glycol | 44 % | 61 % |

## Example 10

The example illustrates that the resulting thin film is stable and can resist chemical cleaning.

A modified membrane prepared as described in Example 2 was mounted on a DDS module 36 provided for a membrane area of 0.45 $m^2$. The permeability of the membrane for Dextran is measured to be 7.6%. The membrane is then subjected to a cleaning process lasting 184 h with the commercially available detergent Ultrasil[R] 10 made by Henkel, at a temperature of 65°C and a pH of 12.0. Ultrasil[R] is commonly used for cleaning ultrafiltration systems used in dairies. After cleaning the Dextran-permeability is measured again and is now 9.4%. As is apparent the cleaning/purification has not resulted in a considerably change of permeability.

## Example 11

The membrane prepared according to Example 2 is tested for its rewetting ability with water. A measure for rewetting is the contact angle with water. The following results were obtained.

Membrane treated according to Example 2: contact angle = 38.2°

Untreated, dry membrane: contact angle = 45.0°

It appears that the membrane according to the invention has a considerably improved hydrophilicity and rewetting ability with water.

## Example 12

A MF membrane (DDS FSM 1.0 PP, available from DDS-Filtration) prepared from polyvinylidene fluoride by conventional phase inversion as described in Example B, and having an average pore size of 1 micrometer, is mounted on a steel frame and immersed for 2 min in an aqueous solution of 1.5 w/v% 2,4-diamino-6-hydroxypyrimidine and 0.5 w/v% polyvinyl alcohol (molecular weight 125,000), 1.0% NaOH and 0.01% sodium lauryl sulphate. The membrane is then removed from the bath and excess liquid is drained off for 1 min. The membrane is then immersed in a 0.5 w/v% solution of hexamethylene-1,6-diisocyanate in 1,1,2-trichlorotrifluoroethane for 2 min, whereupon the membrane is dried in a ventilated oven for 10 min at 90°C.

The membrane is tested in a DDS Lab module 20 using recirculating fatless milk at 2 bar and 20° C for min, whereupon the permeate flux is measured for the treated as well as the untreated membrane.

The following results were obtained:

Untreated membrane: permeate flux = 328 l/m²/h

Treated membrane: permeate flux = 405 l/m²/h

It is obvious that the treatment according to the invention also results in a considerably improved flux for MF membranes.

Example 13

This example shows that the permeability depends on the concentrations of the reactive components used in the method according to the invention.

A UF membrane of a nominal cutoff value of 50,000 is treated with the solutions appearing in the following table. Excess liquid is drained off the membrane between a pair of rollers, whereupon a 0.2 w/v% solution of hexamethylene-1,6-diisocyanate in Freon$^R$ 113 is applied. After a reaction time of 1 min the finished membrane is washed with an aqueous solution comprising 2 w/v% glycerol and 0.2 w/v% sodium dodecyl sulphate. The membrane is then dried in a ventilated oven for approx. 9 min at 95° C. All tests are carried out at room temperature and the pH values are in all cases above 12.

| test no. | w/v% NaOH | w/v% polyvinyl alcohol mol. weight 125,000 | w/v% 2,4-diamino-6-hydroxypyrimidine |
|---|---|---|---|
| 1 | 0.50 | 0.25 | 1.5 |
| 2 | 0.50 | 0.50 | 1.5 |
| 3 | 0.50 | 0.25 | 2.0 |
| 4 | 0.50 | 0.50 | 2.0 |
| 5 | 1.0 | 0.50 | 1.5 |

The membranes are tested in a DDS module 38 having a membrane area of approx. 0.45m². The polymeric test compound is Dextrane 4626 and the test is carried out at 20° C and a mean pressure of 2 bar over a period of 30 min. The following permeability values for the test compound were measured.

| test no. | % permeability |
|---|---|
| 1 | 8.1 |
| 2 | 26.3 |
| 3 | 14.0 |
| 4 | 53.8 |
| 5 | 46.9 |

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

Claims

1. A permeable, porous synthetic membrane with hydrophilic character for use in ultrafiltration or microfil-

EP 0 419 396 A1

tration, characterised in that the hydrophilic character of the membrane is obtained by applying an aqeous solution comprising:

a) one or more polymers of a molecular weight of between 50,000 and 200,000 and comprising at least two functional hydroxy and/or amino groups, preferably at least one group per monomer unit of the polymer, and

b) one or more monomers comprising at least two functional hydroxy and/or amino groups, preferably three functional groups,

c) said aqueous solution having a pH-value of at least 10, preferably at least 12,

followed by removal of excess solution and fixation by applying an isocyanate crosslinking agent dissolved in an organic solvent immiscible with water.

2. A membrane as claimed in claim 1, characterised in that the aqueous solution comprises 0.2-2 w/v% polymer and 0.2-5 w/v% monomer, preferably 0.3-0.8 w/v% polymer and 1-2 w/v% monomer.

3. A membrane as claimed in claim 1 or 2, characterised in that the polymer is selected from the group consisting of polyvinyl alcohol, polyethylene imine, chitosan, hydroxyalkyl cellulose, alkylhydroxyalkyl cellulose, pectine, alginic acid locust bean gum, xanthan gum and other vegetable, animal or microbial polysaccharides and mixtures of such polymers.

4. A membrane as claimed in any of the preceding claims, characterised in that the monomer is selected from the group consisting of sorbitol pentaerythritol, glucose, 2,4-diamino-6-hydroxypyrimidine, piperazine, 4,6-diamino-2-mercaptopyrimidine, 4,5-diamino-6-hydroxy-2-mercaptopyrimidine triethylenetetraamine and 2,6-diaminopyridine and mixtures thereof.

5. A membrane as claimed in any of the preceding claims, characterised in that the polymer is polyvinyl alcohol, and that the monomer is 2,4-diamino-6-hydroxypyrimidine.

6. A membrane as claimed in any of the preceding claims, characterised in that the isocyanate cross linking agent is a compound comprising at least two functional isocyanate groups.

7. A method of preparing a permeable, porous synthetic membrane with hydrophilic character for use in ultrafiltration or microfiltration, characterised by applying to the membrane an aqeous solution, said solution comprising:

a) one or more polymers of a molecular weight of between 50,000 and 200,000 and comprising at least two functional hydroxy and/or amino groups, preferably at least one group per monomer unit of the polymer, and

b) one or more monomers comprising at least two functional hydroxy and/or amino groups, preferably three functional groups,

c) said aqueous solution having a pH-value of at least 10, preferably at least 12,

followed by removal of excess solution and fixation by applying an isocyanate crosslinking agent dissolved in an organic solvent immiscible with water and subsequent curing.

8. A method as claimed in claim 8, characterised by the aqueous solution and/or isocyanate crosslinking agent dissolved in the organic solvent being applied by means of spraying on the one side of the support membrane.

9. A method as claimed in claim 8, characterised by the aqueous solution and/or isocyanate crosslinking agent dissolved in the organic solvent being applied by means of immersion of the membrane.

10. Use of a permeable, porous synthetic membrane with hydrophilic character as claimed in any of the claims 1-7 for ultrafiltration or microfiltration.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 242 761  (ALIGENA AG) | | B 01 D 67 00 |
| | – – – | | B 01 D 69/12 |
| A | EP-A-0 072 002  (TORAY INDUSTRIES) | | |
| | – – – | | |
| A | PATENT ABSTRACTS OF JAPAN, vol. 11, no. 192 (C-429)[2639], 19th June 1987; & JP-A-62 14 904 (FUJI PHOTO FILM CO., LTD) 23-01-1987 | | |
| | – – – | | |
| A | EP-A-0 257 635  (AKTIESELSKABET DE DANSKE SUK- KERFABRIKKER) | | |
| | – – – – – | | |
| | | | **TECHNICAL FIELDS SEARCHED (Int. Cl.5)** |
| | | | B 01 D 67 00 |
| | | | B 01 D 69 00 |

The present search report has been drawn up for all claims

| Place of search | Date of completion of search | Examiner |
|---|---|---|
| The Hague | 21 December 90 | DEVISME F.R. |